# EUROPEAN PATENT APPLICATION

(11) **EP 4 660 748 A1**
(43) Date of publication of application: **10.12.2025**
(21) Application number: 24845785.5
(22) Date of filing: 03.06.2024
(51) Int. Cl.: G06F 1/16, H04N 5/645, H04N 5/655

(54) **CONNECTING DEVICE FOR DETACHABLY CONNECTING DISPLAY AND STAND**

(30) Priority: 27.07.2023 KR 20230098301
(71) Applicant: Samsung Electronics Co., Ltd., Suwon-si, Gyeonggi-do 16677 (KR)
(72) Inventor: LEE, Sanggoo, Suwon-si Gyeonggi-do 16677 (KR); KIM, Bongjoo, Suwon-si Gyeonggi-do 16677 (KR); KIM, Sunggi, Suwon-si Gyeonggi-do 16677 (KR); JUNG, Seunggu, Suwon-si Gyeonggi-do 16677 (KR)
(74) Representative: Gulde & Partner
(86) International application number: PCT/KR2024/007590
(87) International publication number: WO 2025/023481

(57) **Abstract**

Disclosed is a connection device for connecting a display and a stand. The connection device comprises: a plurality of coupling protrusions provided on a display; and a mounting unit connected to a stand so as to connect the display and the stand and including a plurality of hooks respectively coupled to the plurality of coupling protrusions, wherein some of the plurality of hooks move in a first direction so as to be coupled to the plurality of coupling protrusions, and move in a second direction opposite to the first direction so as to be separable from the plurality of coupling protrusions.

## Description

### Technical Field

The disclosure relates to a display and a connecting apparatus which detachably connects a stand.

### Background Art

In general, a display is an apparatus which displays a screen, and examples thereof include a monitor or a television. With respect to display apparatuses, self-emissive display panels such as organic light-emitting diodes or micro light-emitting diodes, and light-receiving display panels such as liquid crystal display panels may be used.

Displays may be divided into wall-mounted type displays which are fixed to walls and stand type displays which are used on a stand. A stand type display may include a stand which supports the display for the display to be left standing on the floor. The stand according to the related art may support the display such that an upper end part thereof is connected to a back surface of the display.

The stand may be detachably mounted to the back surface of the display through a connecting apparatus. Recently, a one step mounting structure with which the stand can be mounted in one step to the display without separate screws is being developed to make connection between the stand and the display easy. However, because of the one step mounting structure, thickness of each of a mounting part of the display and the connecting apparatus have become thicker and the structure formed in a complicated manner. Accordingly, the one step mounting structure between the display and the stand described above has had a problem of not contributing toward slimming the display.

### Disclosure

### Technical Solution

According to one or more embodiments, a connecting apparatus arrangeable to connect a display and a stand. The connecting apparatus includes a plurality of coupling protrusions arrangeable at the display, and a mounting unit connectable to the stand, the mounting unit including a plurality of hooks coupleable to the plurality of coupling protrusions, respectively, so that while the plurality of hooks of the mounting unit that is connected to the stand are coupled to the plurality of coupling protrusions which are arranged at the display, the display and the stand are connected to each other. At least a number of hooks among the plurality of hooks are moved along a first direction to couple to the plurality of coupling protrusions, respectively, and moved along a second direction opposite the first direction to decoupleable from the plurality of coupling protrusions, respectively.

The plurality of coupling protrusions may include a first coupling protrusion and a second coupling protrusion coupled at a rear chassis of the display, and a third coupling protrusion and a fourth coupling protrusion spaced apart from the first coupling protrusion and the second coupling protrusion and at a lower side of the first coupling protrusion and second coupling protrusion.

The plurality of coupling protrusions may respectively include a column part arranged to be fixed to the rear chassis, and a head part having a greater diameter than a diameter of the column part.

The plurality of coupling protrusions may be a rivet nut or a pop nut.

The plurality of hooks may include a first hook and a second hook corresponding to the first coupling protrusion and the second coupling protrusion, respectively, and a third hook and a fourth hook corresponding to the third coupling protrusion and the fourth coupling protrusion, respectively.

The mounting unit may include a body, a support plate, coupleable to the body, the first hook and the second hook may be integrally formed on the support plate, and a slider slidably connectable to the support plate so that while the slider is connected to the support plate, the slider is moveable along a direction adjacent to the first hook and the second hook and the slider is moveable along a direction away from the first hook and the second hook, the third hook and the fourth hook may be integrally formed on the slider.

The slider may be elastically supported at the support plate in a direction moving away from the first hook and the second hook.

The mounting unit may include at least one elastic member connectable between the slider and the support plate.

The slider further may further include an operation knob which passes through the body and moves the slider.

The plurality of coupling protrusions may include at least three first coupling protrusions at a rear chassis of the display, and at least three second coupling protrusions which are spaced apart from the at least three first coupling protrusions at a lower side of the at least three first coupling protrusions. The plurality of hooks may include at least three first hooks corresponding to the at least three first coupling protrusions, and at least three second hooks corresponding to the at least three second coupling protrusions.

The connecting apparatus according to one or more embodiments may further include a pair of reinforcement plates coupleable to at one surface of the rear chassis. A material for the pair of reinforcement plates may be aluminum.

The mounting unit may further include a fixing part with one side thereof connectable to an upper end part of the stand and an opposite side thereof rotatably connected to the support plate.

The support plate may further include a limiting protrusion which is protruded toward the fixing part. The fixing part may further include at least one stopping projection which limits a rotation angle of the fixing part by interfering with the limiting protrusion.

According to one or more embodiments, a connecting apparatus arrangeable to connect a display and a stand includes a first coupling protrusion and a second coupling protrusion arrangeable at a mounting part at a back surface of the display and a third coupling protrusion and a fourth coupling protrusion arrangeable at a lower side of the mounting part than the first coupling protrusion and the second coupling protrusion, and a mounting unit with one side thereof connectable to the stand, and an opposite side thereof mountable to and detachably from to the mounting part. The mounting unit includes a support plate including a first hook and a second hook which are coupleable to and decouplable from the first coupling protrusion and the second coupling protrusion, a slider with a third hook and a fourth hook which are coupleable to and decouplable from the third coupling protrusion and the fourth coupling protrusion, and slidably connectable to the support plate, and a body with a first coupling hole, a second coupling hole, a third coupling hole, and a fourth coupling hole in which the first coupling protrusion, the second coupling protrusion, the third coupling protrusion, and the fourth coupling protrusion are insertable, respectively, so that while the first coupling protrusion, the second coupling protrusion, the third coupling protrusion, and the fourth coupling protrusion the mounting unit is coupled to the support plate.

The mounting unit may further include a first elastic member and a second elastic member which elastically support the slider in a direction along which the slider moves away from the first hook and the second hook.

### Description of Drawings

The above and/or other aspects of the disclosure will be more apparent by describing certain embodiments of the disclosure with reference to the accompanying drawings, in which:
FIG. 1 is a view illustrating an example of a display and a stand connected by a connecting apparatus according to one or more embodiments;
FIG. 2 is an exploded view illustrating a mounting unit of a connecting apparatus and a mounting part of a display to which the mounting unit is detachably connected according to one or more embodiments;
FIG. 3 is an enlarged view illustrating an example of a plurality of coupling protrusions of a connecting apparatus provided at a rear chassis according to one or more embodiments;
FIG. 4 is an exploded view illustrating an example of a reinforcement plate coupled to a rear chassis of a display according to one or more embodiments;
FIG. 5 is an exploded view illustrating a mounting unit of a connecting apparatus according to one or more embodiments;
FIG. 6 is a perspective view illustrating a connecting apparatus according to one or more embodiments;
FIG. 7 is a perspective view illustrating a support plate of a mounting unit of a connecting apparatus according to one or more embodiments;
FIG. 8 is a perspective view illustrating a fixing part of a mounting unit of a connecting apparatus according to one or more embodiments;
FIG. 9 is a view illustrating a mounting unit of a connecting apparatus prior to connecting to a mounting part of a display according to one or more embodiments;
FIG. 10 is a view illustrating a mounting unit of a connecting apparatus positioned in a mounting part of a display according to one or more embodiments;
FIG. 11 and FIG. 12 are views illustrating examples of an operation of connecting a mounting unit of a connecting apparatus to a mounting part of a display according to one or more embodiments;
FIG. 13 is a view illustrating a mounting unit of a connecting apparatus completed in being mounted to a mounting part of a display according to one or more embodiments; and
FIG. 14 is a schematic view illustrating a connecting apparatus according to one or more embodiments.

### Detailed Description of Exemplary Embodiments

Embodiments described in the disclosure and configurations shown in the drawings are merely one or more example embodiments, and various modified examples which can substitute the embodiments and drawings of the disclosure at a time-point this disclosure was filed may be provided.

In the disclosure, like reference numerals or symbols shown in each drawing may indicate components or elements that perform substantially the same function.

Terms used in the disclosure have been used to describe embodiments herein, and are not intended to limit the disclosure described. A singular expression includes a plural expression, unless otherwise specified. It is to be understood that the terms such as "include" or "have" are used herein to designate a presence of a characteristic, number, step, operation, element, component, or a combination thereof, and not to preclude a presence or a possibility of adding one or more of other characteristics, numbers, steps, operations, elements, components or a combination thereof.

Terms including ordinal numbers such as "first" and "second" used in the disclosure may be used in describing various elements, but the elements are not limited by the above-described terms. The above-described terms may be used only for the purpose of distinguishing one element from another element. For example, a first element may be designated as a second element without exceeding the scope of protection of the disclosure, and likewise, the second element may also be designated as the first element. The term "and/or" may include a combination of a plurality of items described associated therewith or any item from among a plurality of items described associated therewith.

Terms used in the disclosure such as a "tip end", a "back end", an "upper part", a "lower part", a "front surface", a "back surface", an "upper surface", a "lower surface", a "upper end", a "lower end", a "one end", an "opposite end", a "left side", a "right side", and the like have been defined based on the drawing, and shapes and positions of each element are not limited by the terms.

A stand for a display according to one or more embodiments will be described in detail with reference to the accompanied drawing below.

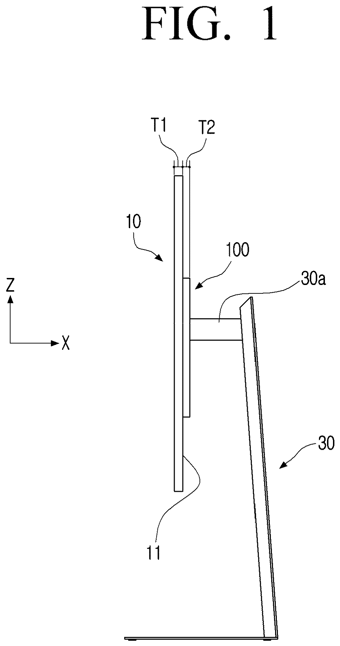

FIG. 1 is a view illustrating an example of a display and a stand connected by a connecting apparatus according to one or more embodiments.

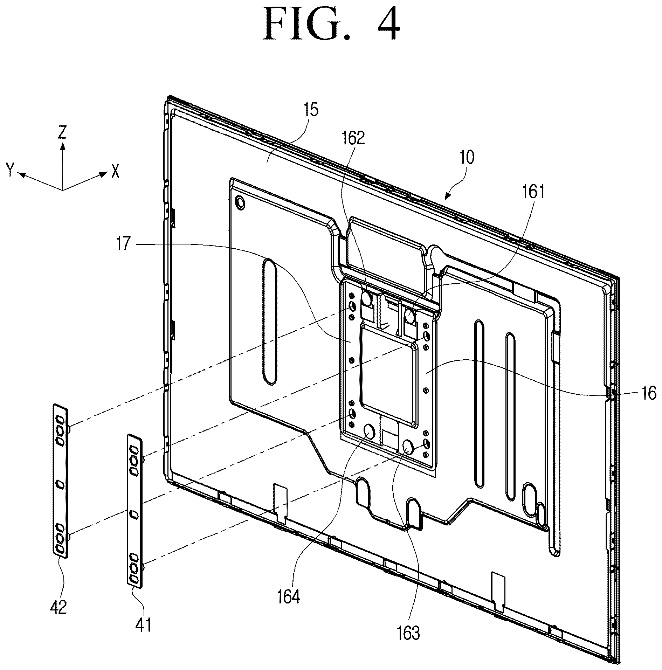

Referring to FIG. 1, a connecting apparatus 100 may detachably inter-connect a display 10 and a stand 30. The connecting apparatus 100 may contribute in slimming the display 10 by improving or minimizing a thickness T1 of the display 10 and a thickness T2 of the connecting apparatus 100 through a structure described below. The connecting apparatus 100 may include a mounting unit 101 connected to a fixing frame 30a provided at an upper end of the stand 30, and first, second, third, and fourth coupling protrusions 161, 162, 163, and 164 (referring to FIG. 4) provided at a rear chassis 15 of the display 10.

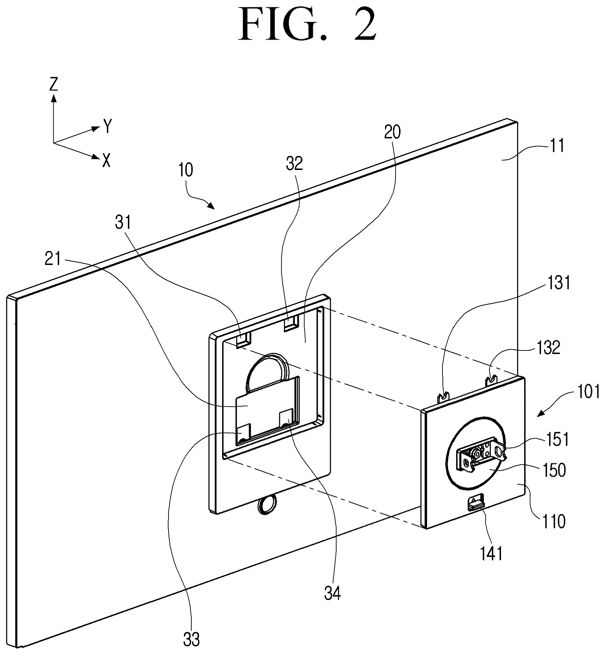

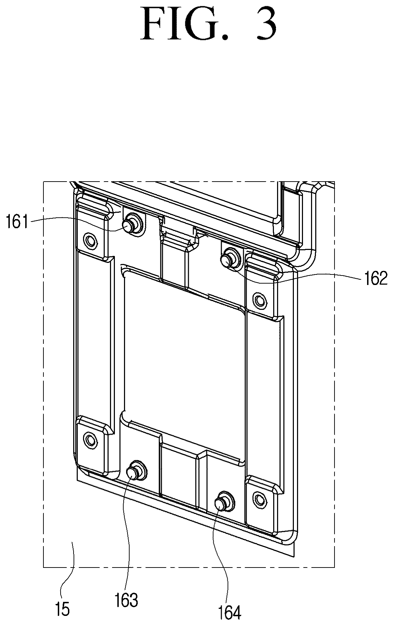

FIG. 2 is an exploded view illustrating a mounting unit of a connecting apparatus and a mounting part of a display to which the mounting unit is detachably connected according to one or more embodiments. FIG. 3 is an enlarged view illustrating an example of a plurality of coupling protrusions of a connecting apparatus provided at a rear chassis according to one or more embodiments.

Referring to FIG. 2, the mounting unit 101 may include a body 110, and a fixing part 150 which is rotatably connected to the body 110.

The body 110 may be inserted in a mounting part 20 of the display 10 which is formed in a groove form. A depth of the mounting part 20 of the display 10 and a thickness of the body 110 of the mounting unit 101 may be same. If the body 110 of the mounting unit 101 is inserted in the mounting part 20 of the display 10, an aesthetically slim sense may be provided due to the body 110 of the mounting unit 101 not being protruded from the mounting part 20 of the display 10.

The mounting part 20 of the display 10 may include a rear cover 11 of the display 10. At an inner side of the rear cover 11, the rear chassis 15 of the display 10 may be disposed. A first coupling hole 31 and a second coupling hole 32 may be provided at the mounting part 20 of the display 10. The first coupling hole 31 and the second coupling hole 32 may be positioned at a same height with an interval therebetween along a Y-axis.

Referring to FIG. 2 and FIG. 3, a first hook 131 provided at the mounting unit 101 may be detachably inserted in the first coupling hole 31. The first coupling hole 31 may be disposed at a position corresponding to a first coupling protrusion 161 provided at the rear chassis 15 within the mounting part 20 of the display 10. The first hook 131 of the mounting unit 101 may be coupled to the first coupling protrusion 161 after being inserted in the first coupling hole 31. A second hook 132 provided at the mounting unit 101 may be detachably inserted in the second coupling hole 32. The second coupling hole 32 may be disposed at a position corresponding to a second coupling protrusion 162 provided at the rear chassis 15 within the mounting part 20 of the display 10. The second hook 132 of the mounting unit 101 may be coupled to the second coupling protrusion 162 after being inserted in the second coupling hole 32.

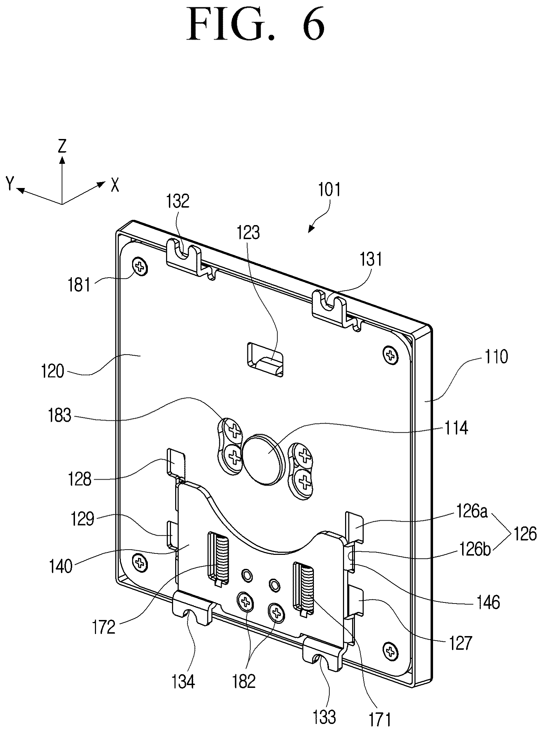

A guide groove 21 in which a slider 140 (referring to FIG. 6) provided at the mounting unit 101 is movably inserted along a Z-axis may be provided at the mounting part 20 of the display 10. In the guide groove 21, a third coupling hole 33 and a fourth coupling hole 34 may be provided. The third coupling hole 33 and the fourth coupling hole 34 may be positioned at a same height with an interval therebetween along an Y-axis.

Referring to FIG. 2 and FIG. 3, a third hook 133 provided at the mounting unit 101 may be detachably inserted in the third coupling hole 33. The third coupling hole 33 may be disposed at a position corresponding to a third coupling protrusion 163 provided at the rear chassis 15 within the mounting part 20 of the display 10. The third hook 133 of the mounting unit 101 may be coupled to the third coupling protrusion 163 after being inserted in the third coupling hole 33. A fourth hook 134 provided at the mounting unit 101 may be detachably inserted in the fourth coupling hole 34. The fourth coupling hole 34 may be disposed at a position corresponding to a fourth coupling protrusion 164 provided at the rear chassis 15 within the mounting part 20 of the display 10. The fourth hook 134 of the mounting unit 101 may be coupled to the fourth coupling protrusion 164 after being inserted in the fourth coupling hole 34.

The first and second coupling holes 31 and 32 may be positioned at a higher place along the Z-axis direction than the third and fourth coupling holes 33 and 34. The first and second coupling protrusions 161 and 162 may be positioned at a higher position along the Z-axis direction than the first and second coupling holes 31 and 32. The third and fourth coupling protrusions 163 and 164 may be positioned at a lower position along the Z-axis direction than the third and fourth coupling holes 33 and 34. Positions of the first, second, third, and fourth coupling protrusions 161, 162, 163, and 164 corresponding respectively to first, second, third, and fourth coupling holes 31, 32, 33, and 34 take into consideration a direction to which the first, second, third, and fourth hooks 131, 132, 133, and 134 respectively couple with the corresponding first, second, third, and fourth coupling protrusions 161, 162, 163, and 164. For example, the first and second hooks 131 and 132 may be coupled to an upper side along the Z-axis direction of the first and second coupling protrusions 161 and 162 after being inserted into the first and second coupling holes 31 and 32. The third and fourth hooks 133 and 134 may be coupled to a lower side along the Z-axis direction of the third and fourth coupling protrusions 163 and 164 after being inserted into the third and fourth coupling holes 33 and 34. As described above, as a coupling direction of the first and second hooks 131 and 132 and a coupling direction of the third and fourth hooks 133 and 134 are placed opposite to each other, the mounting unit 101 may be stably mounted to the mounting part 20 of the display 10.

Referring to FIG. 3, the first, second, third, and fourth coupling protrusions 161, 162, 163, and 164 may be respectively protruded at a predetermined height at one surface of the rear chassis 15 which faces with the mounting part 20 of the display 10. The first, second, third, and fourth coupling protrusions 161, 162, 163, and 164 may respectively have a column part and a head part. The head part may have a greater diameter than the column part. If the first, second, third, and fourth hooks 131, 132, 133, and 134 are coupled to the first, second, third, and fourth coupling protrusions 161, 162, 163, and 164, respectively, the first, second, third, and fourth hooks 131, 132, 133, and 134 may have interference in movement in the Y-axis direction by the head parts of the first, second, third, and fourth coupling protrusions 161, 162, 163, and 164. Accordingly, the first, second, third, and fourth hooks 131, 132, 133, and 134 may not be separated from the first, second, third, and fourth coupling protrusions 161, 162, 163, and 164 along the Y-axis direction.

The first, second, third, and fourth coupling protrusions 161, 162, 163, and 164 may be, for example, rivet nuts or pop nuts which are firmly coupled to the rear chassis 15 without deforming the rear chassis 15 which has a thin thickness of roughly about 0.5 mm.

FIG. 4 is an exploded view illustrating an example of a reinforcement plate coupled to a rear chassis of a display according to one or more embodiments.

Referring to FIG. 4, because the rear chassis 15 has a thin thickness, a first reinforcement plate 41 and a second reinforcement plate 42 may be coupled at one surface (a direction facing a front direction of the display 10) of the rear chassis 15 for the mounting unit 101 to be stably supported when mounting to the mounting part 20 of the display 10.

The first reinforcement plate 41 may be disposed along the Z-axis direction of a first region 16 of the rear chassis 15. The first reinforcement plate 41 may be disposed between the first coupling protrusion 161 and the third coupling protrusion 163. The second reinforcement plate 42 may be disposed along the Z-axis direction of a second region 17 of the rear chassis 15. The second reinforcement plate 42 may be disposed between the second coupling protrusion 162 and the fourth coupling protrusion 164.

The first and second reinforcement plates 41 and 42 may have rigidity and may be formed of a metal which is light in weight (e.g., aluminum, etc.) to minimize an increase in weight of the display 10. The first and second reinforcement plates 41 and 42 may be respectively coupled to the first and second regions 16 and 17 of the rear chassis 15 by welding or riveting.

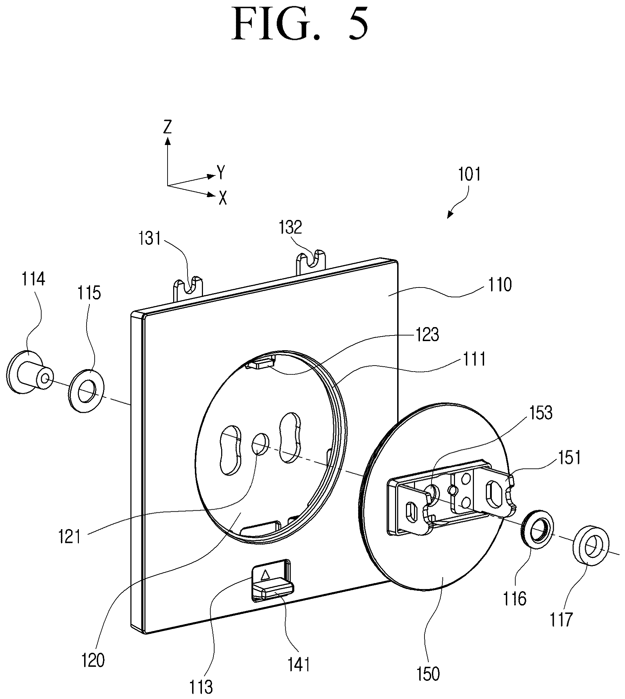

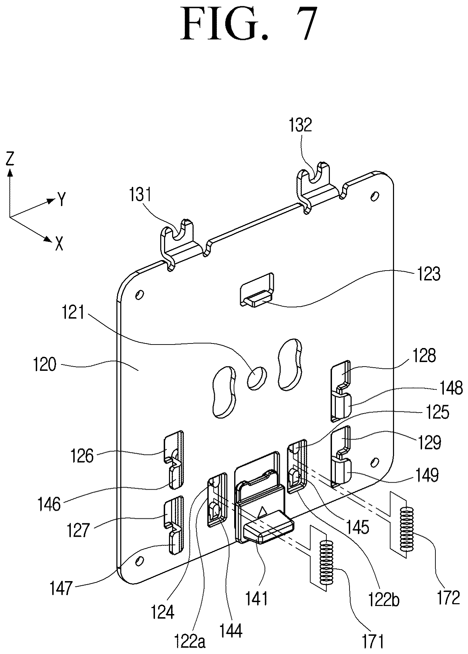

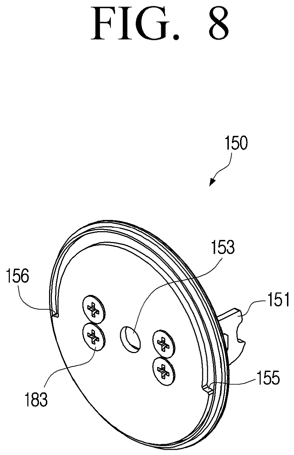

FIG. 5 is an exploded view illustrating a mounting unit of a connecting apparatus according to one or more embodiments. FIG. 6 is a perspective view illustrating a connecting apparatus according to one or more embodiments. FIG. 7 is a perspective view illustrating a support plate of a mounting unit of a connecting apparatus according to one or more embodiments. FIG. 8 is a perspective view illustrating a fixing part of a mounting unit of a connecting apparatus according to one or more embodiments.

Referring to FIG. 5, the mounting unit 101 may include the body 110, a support plate 120, a slider 140 provided slidably at the support plate 120, and a fixing part 150 which is rotatably coupled to the support plate 120.

The body 110 may be coupled with the support plate 120 by a plurality of screws 181. The body 110 may be provided with an insertion hole 111 in which the fixing part 150 is inserted. The insertion hole 111 may be formed in a circular shape such that the fixing part 150, of which an outer part thereof forms a circular shape, can rotate about the X-axis.

Referring to FIG. 5 and FIG. 6, the support plate 120 may have the first hook 131 and the second hook 132 provided at an upper end thereof with a certain interval therebetween. The interval between the first hook 131 and the second hook 132 may correspond to an interval between the first coupling protrusion 161 and the second coupling protrusion 162.

At a center part of the support plate 120, a through hole 121 through which the fastener 114 is inserted may be provided. The fixing part 150 may have the support plate 120 rotatably connected by the fastener 114.

At the support plate 120, a limiting protrusion 123 may be provided toward an upper side of the through hole 121 along the Z-axis direction. The limiting protrusion 123 may limit a rotation angle of the body 110 when the body 110 rotates in a clockwise direction or anti-clockwise direction with respect to the fixing part 150.

The support plate 120 may be provided with first, second, third, and fourth guide holes 126, 127, 128, and 129 to guide sliding of the slider 140 along the Z-axis direction. The first, second, third, and fourth guide holes 126, 127, 128, and 129 may be provided at a lower side of the support plate 120.

A first guide hole 126 may include a first region 126a in which a first latch part 146 of the slider 140 can be inserted or extracted along the X-axis direction, and a second region 126b in which the first latch part 146 of the slider 140 can be slid along the Z-axis direction. A width of the first region 126a (a width along the Y-axis direction) may be wider than a width of the second region 126b. A width of the second region 126b may have a width of an extent corresponding to a thickness of the first latch part 146 of the slider 140.

A second guide hole 127 may be provided at a lower side of the first guide hole 126 along the Z-axis direction. The second guide hole 127 may include a first region and a second region like the first guide hole 126. A third guide hole 128 may be disposed symmetrically to the first guide hole 126 with respect to a center line which is parallel to the Z-axis direction that passes a center of the support plate 120. A fourth guide hole 129 may be disposed symmetrically to the second guide hole 127 with respect to the center line which is parallel to the Z-axis direction that passes the center of the support plate 120.

The support plate 120 may include a first elastic member insertion hole 122a which is adjacent to the third guide hole 128 and disposed along the Z-axis direction. In the first elastic member insertion hole 122a, a first elastic member 171 may be inserted. One end of the first elastic member 171 may be fixed to a first fixed protrusion 124 provided at the first elastic member insertion hole 122a, and an opposite end of the first elastic member 171 may be fixed to a second fixed protrusion 144 provided at the slider 140.

The support plate 120 may include a second elastic member insertion hole 122b which is adjacent to the fourth guide hole 129 and disposed along the Z-axis direction. In the second elastic member insertion hole 122b, a second elastic member 172 may be inserted. One end of the second elastic member 172 may be fixed at a third fixed protrusion 125 provided at the second elastic member insertion hole 122b, and an opposite end of the second elastic member 172 may be fixed to a fourth fixed protrusion 145 provided at the slider 140.

The first elastic member 171 and the second elastic member 172 may elastically support the slider 140 along the Z-axis direction with respect to the support plate 120. The first elastic member 171 and the second elastic member 172 may be coil springs.

The slider 140 may be slidably connected to the support plate 120 by first, second, third, and fourth latch parts 146, 147, 148, and 149. The slider 140 may have the third hook 133 and the fourth hook 134 provided at a lower end thereof with a certain interval therebetween. An interval between the third hook 133 and the fourth hook 134 may correspond to an interval between the third coupling protrusion 163 and the fourth coupling protrusion 164. The third hook 133 and the fourth hook 134 may be integrally formed with the slider 140 and move along the Z-axis direction together with the slider 140. Accordingly, the slider 140 may have the third hook 133 and the fourth hook 134 coupled to or release coupling from the third coupling protrusion 163 and the fourth coupling protrusion 164, respectively.

The slider 140 may include an operation knob 141 for a user to push or pull with a finger so as to be moved along the Z-axis direction by the user. The operation knob 141 may be protruded to outside of the body 110 through a through hole 113 of the body 110 so as to be operated by the user. The operation knob 141 may be fastened to the slider 140 by a plurality of screws 182.

Referring to FIG. 7 and FIG. 8, the fixing part 150 may include a bracket 151 which is connected to the fixing frame 30a (referring to FIG. 1) of the stand 30. The bracket 151 may be coupled to one surface of the fixing part 150 by a plurality of screws 183.

The fixing part 150 may be provided with a through hole 153 through which the fastener 114 passes through at a center thereof. The fastener 114 may sequentially pass through the through hole 121 of the support plate 120 and the through hole 153 of the fixing part 150. At the fastener 114, a washer 115 and a plurality of spring washers 118 may be coupled. The fastener 114 may be fastened with a nut 117 after having passed through the through hole 121 of the support plate 120 and the through hole 153 of the fixing part 150.

The fixing part 150 may rotate at a predetermined angle in the clockwise direction or the anti-clockwise direction about the fastener 114 as a central axis. At an outer circumference of the fixing part 150, a first stopping projection 155 and a second stopping projection 156 which interferes with the limiting protrusion 123 may be provided. The first stopping projection 155 and the second stopping projection 156 may be disposed symmetrically based on a center of the fixing part 150. The first stopping projection 155 may be interfered by the limiting protrusion 123 when rotating the fixing part 150 in the clockwise direction. The second stopping projection 156 may be interfered by the limiting protrusion 123 when rotating the fixing part 150 in the anti-clockwise direction. Accordingly, the fixing part 150 may be limited in an angle of rotation in the clockwise direction and the anti-clockwise direction by the first and second stopping projections 155 and 156.

The fixing part 150 may be rotatably coupled to the support plate 120, or fixed to the fixing frame 30a of the stand 30. Accordingly, when the mounting unit 101 is mounted to the mounting part 20 of the display 10, the display 10 connected with the mounting unit 101 may rotate in the clockwise direction or the anti-clockwise direction with respect to the stand 30. For example, because the display 10 may roll rotate with respect to the stand 30, the user may adjust the display 10 to a desired angle. The fixing part 150 may be elastically coupled to the support plate 120 in the X-axis direction by the plurality of spring washers 118. Accordingly, the display 10 may stably maintain an adjusted state at a predetermined angle.

An example of mounting the mounting unit 101 to the mounting part 20 of the display 10 will be described below with reference to the drawings.

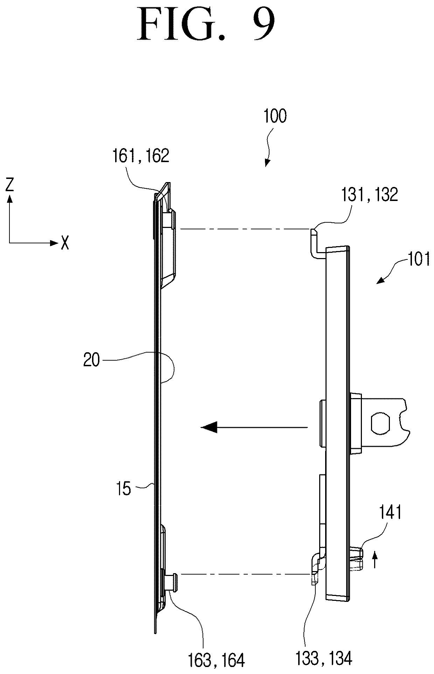

FIG. 9 is a view illustrating a mounting unit of a connecting apparatus prior to connecting to a mounting part of a display according to one or more embodiments.

Referring to FIG. 9, the mounting part 20 is aligned to mount the mounting unit 101 to the mounting part 20 of the display 10. The first and second hooks 131 and 132 may be respectively aligned to correspond to the first and second coupling holes 31 and 32 (referring to FIG. 2) provided at the mounting part 20 of the display 10.

The operation knob 141 of the slider 140 may be moved to an upper side along the Z-axis direction. The operation knob 141 may be moved to the upper side along the Z-axis direction for the third and fourth hooks 133 and 134 to correspond to the third and fourth coupling holes 33 and 34 (referring to FIG. 2) provided at the mounting part 20 of the display 10 together with the slider 140. In this case, the slider 140 may receive elastic force to an upper side along the Z-axis direction by the first and second elastic members 171 and 172. Accordingly, the operation knob 141 of the slider 140 may be continuously pressed to the upper side along the Z-axis direction by the user until the third and fourth hooks 133 and 134 are inserted in the third and fourth coupling holes 33 and 34.

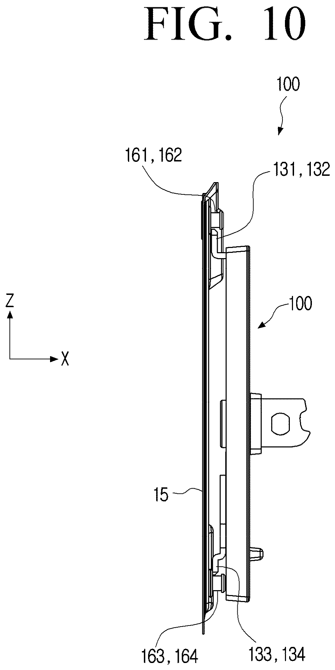

FIG. 10 is a view illustrating a mounting unit of a connecting apparatus positioned in a mounting part of a display according to one or more embodiments.

Referring to FIG. 10, the mounting unit 101 may be moved toward the mounting part 20 of the display 10 along the X-axis direction for the first, second, third, and fourth hooks 131, 132, 133, and 134 to be respectively inserted in the first, second, third, and fourth coupling holes 31, 32, 33, and 34 provided at the mounting part 20 of the display 10. Accordingly, the mounting unit 101 may be positioned at the mounting part 20 of the display 10.

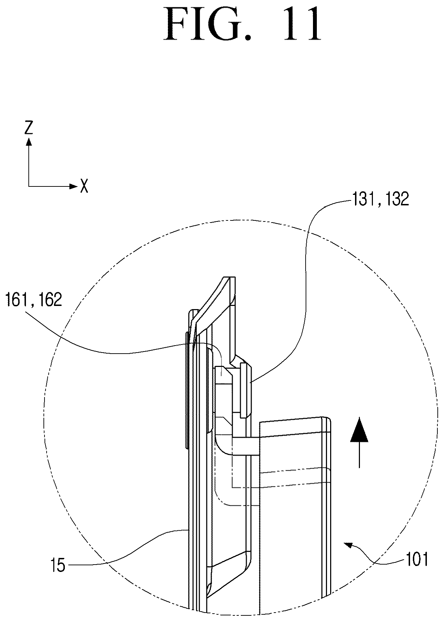

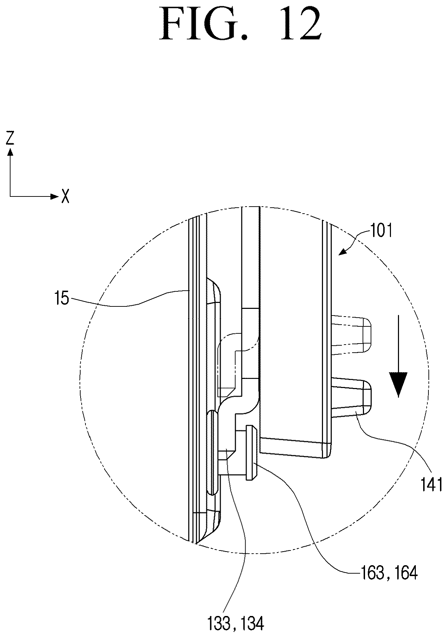

FIG. 11 and FIG. 12 are views illustrating examples of an operation of connecting a mounting unit of a connecting apparatus to a mounting part of a display according to one or more embodiments.

Referring to FIG. 11, the first and second hooks 131 and 132 may be respectively coupled to the first and second coupling protrusions 161 and 162 provided at the rear chassis 15 by moving the mounting unit 101 to an upper side along the Z-axis direction while the first and second hooks 131 and 132 are inserted in the first and second coupling holes 31 and 32, respectively.

Referring to FIG. 12, the operation knob 141 of the slider 140 which was moved to the upper side along the Z-axis direction may be released. Accordingly, the slider 140 may move to a lower side along the Z-axis direction by the elastic force of the first and second elastic members 171 and 172. The third and fourth hooks 133 and 134 may be respectively coupled to the third and fourth coupling protrusions 163 and 164 by moving to a lower side along the Z-axis direction moving together with the slider 140.

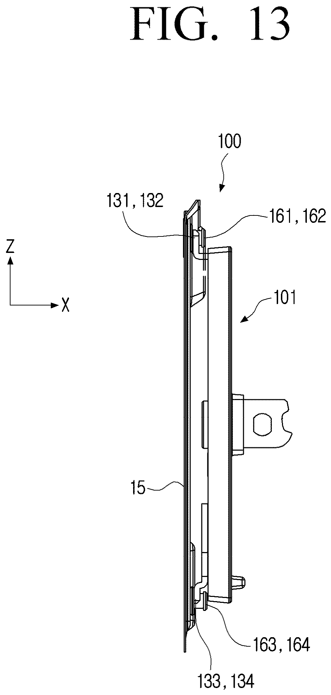

FIG. 13 is a view illustrating a mounting unit of a connecting apparatus completed in being mounted to a mounting part of a display according to one or more embodiments.

Referring to FIG. 13, the mounting unit 101 may be stably mounted to the mounting part 20 of the display 10 based on the first, second, third, and fourth hooks 131, 132, 133, and 134 being respectively coupled to the first, second, third, and fourth coupling protrusions 161, 162, 163, and 164.

To separate the mounting unit 101 from the mounting part 20 of the display 10, the above-described order by which the mounting unit 101 is mounted to the mounting part 20 of the display 10 may be carried out in reverse order.

Meanwhile, the order by which the mounting unit 101 is mounted to the mounting part 20 of the display 10 may be carried out differently from that described above. For example, the first and second hooks 131 and 132 of the mounting unit 101 may be respectively inserted into the first and second coupling holes 31 and 32 provided at the mounting part 20 of the display 10. Then, the mounting unit 101 may be moved to an upper side direction of the display 10 to couple the first and second hooks 131 and 132 of the mounting unit 101 to the first and second coupling protrusions 161 and 162, respectively.

The mounting unit 101 may be in an inclined state at a predetermined angle with respect to the display 10 because the third and fourth hooks 133 and 134 are not yet inserted in the third and fourth coupling holes 33 and 34, respectively.

In this state, the operation knob 141 of the slider 140 may be pressed toward the upper side of the mounting unit 101 for the third and fourth hooks 133 and 134 to be aligned at positions corresponding to the third and fourth coupling holes 33 and 34, respectively. A lower side of the mounting unit 101 may be rotated based on the first and second hooks 131 and 132 toward a side of the mounting part 20 of the display 10, and the third and fourth hooks 133 and 134 may be inserted in the third and fourth coupling holes 33 and 34, respectively. Then, the operation knob 141 of the slider 140 may be released to couple the third and fourth hooks 133 and 134 to the third and fourth coupling protrusions 163 and 164, respectively.

The connecting apparatus 100 according to one or more embodiments may include the mounting unit 101, and the first, second, third, and fourth coupling protrusions 161, 162, 163, and 164 disposed at the display. As described above, only four coupling protrusions 161, 162, 163, and 164 may be simply disposed at the display 10. As described above, by configuring a portion of the connecting apparatus 100 provided at the display 10 in a simple manner, a thickness of the display 10 may be improved or minimized, and material costs may be reduced.

The connecting apparatus 100 according to one or more embodiments may improve usability by easily connecting the stand 30 to the back surface of the display 10.

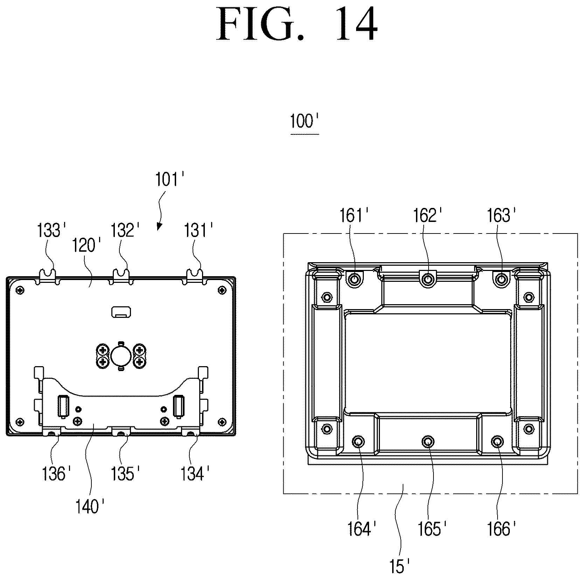

FIG. 14 is a schematic view illustrating a connecting apparatus according to one or more embodiments.

A connecting apparatus 100' according to one or more embodiments may widen a width of a mounting unit 101', a width of a support plate 120', and a width of a slider 140' as in FIG. 14 taking into consideration that the weight of the display 10 increases if a size of the display 10 is a large-format, and increase a number of hooks 131', 132', and 133' provided at the support plate 120' and a number of hooks 134', 135', and 136' provided at the slider 140'. In this case, a width of the mounting part 20 of the display 10 may also be widened to a width corresponding to the width of the mounting unit 101'. In this case, at the rear cover 11 of the display 10, a plurality of coupling holes corresponding to a plurality of hooks 131', 132', 133', 134', 135', and 136' may be formed.

A plurality of coupling protrusions 161', 162', 163', 164', 165', and 166' provided at a rear chassis 15' of the display 10 may be increased to a number corresponding respectively to a plurality of hooks 131', 132', 133', 134', 135', and 136', respectively.

Accordingly, the connecting apparatus 100' according to one or more embodiments may stably connect a display of a large-format size to a stand.

While the disclosure has been illustrated and described with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. A connecting apparatus arrangeable to connect a display and a stand, the connecting apparatus comprising:
a plurality of coupling protrusions arrangeable at the display; and
a mounting unit connectable to the stand, the mounting unit including a plurality of hooks coupleable to the plurality of coupling protrusions, respectively, so that while the plurality of hooks of the mounting unit that is connected to the stand are coupled to the plurality of coupling protrusions which are arranged at the display, the display and the stand are connected to each other,
wherein at least a number of hooks from among the plurality of hooks are moved along a first direction to couple to the plurality of coupling protrusions, respectively, and moved along a second direction opposite the first direction to decoupleable from the plurality of coupling protrusions, respectively.

2. The connecting apparatus of claim 1, wherein the plurality of coupling protrusions comprises:
a first coupling protrusion and a second coupling protrusion arranged on a rear chassis of the display; and
a third coupling protrusion and a fourth coupling protrusion spaced apart from the first coupling protrusion and the second coupling protrusion and at a lower side of the first coupling protrusion and second coupling protrusion.

3. The connecting apparatus of claim 2, wherein the plurality of coupling protrusions respectively comprises:
a column part arranged to be fixed to the rear chassis; and
a head part having a greater diameter than a diameter of the column part.

4. The connecting apparatus of claim 3, wherein
the plurality of coupling protrusions are a rivet nut or a pop nut.

5. The connecting apparatus of claim 2, wherein the plurality of hooks comprises:
a first hook and a second hook corresponding to the first coupling protrusion and the second coupling protrusion, respectively; and
a third hook and a fourth hook corresponding to the third coupling protrusion and the fourth coupling protrusion, respectively.

6. The connecting apparatus of claim 5, wherein the mounting unit comprises:
a body;
a support plate, coupleable to the body, the first hook and the second hook being integrally formed on the support plate; and
a slider slidably connectable to the support plate so that while the slider is connected to the support plate, the slider is moveable along a direction adjacent to the first hook and the second hook and the slider is moveable along a direction away from the first hook and the second hook, the third hook and the fourth hook being integrally formed on the slider.

7. The connecting apparatus of claim 6, wherein
the slider is elastically supported at the support plate in a direction moving away from the first hook and the second hook.

8. The connecting apparatus of claim 7, wherein the mounting unit comprises:
at least one elastic member connectable between the slider and the support plate.

9. The connecting apparatus of claim 6, wherein the slider further comprises:
an operation knob which passes through the body and moves the slider.

10. The connecting apparatus of claim 1, wherein the plurality of coupling protrusions comprise:
at least three first coupling protrusions at a rear chassis of the display; and
at least three second coupling protrusions which are spaced apart from the at least three first coupling protrusions at a lower side of the at least three first coupling protrusions, and
the plurality of hooks comprises:
at least three first hooks corresponding to the at least three first coupling protrusions; and
at least three second hooks corresponding to the at least three second coupling protrusions.

11. The connecting apparatus of claim 2, further comprising:
a pair of reinforcement plates coupleable to one surface of the rear chassis, and
wherein a material for the pair of reinforcement plates is aluminum.

12. The connecting apparatus of claim 6, wherein the mounting unit further comprises:
a fixing part with one side thereof connectable to an upper end part of the stand and an opposite side thereof rotatably connected to the support plate.

13. The connecting apparatus of claim 12, wherein the support plate further comprises:
a limiting protrusion which is protruded toward the fixing part, and
the fixing part further comprises:
at least one stopping projection which limits a rotation angle of the fixing part by interfering with the limiting protrusion.

14. A connecting apparatus arrangeable to connect a display and a stand, the connecting apparatus comprising:
a first coupling protrusion and a second coupling protrusion arrangeable at a mounting part at a back surface of the display;
a third coupling protrusion and a fourth coupling protrusion arrangeable at a lower side of the mounting part than the first coupling protrusion and the second coupling protrusion; and
a mounting unit with one side thereof connectable to the stand, and an opposite side thereof mountable to and detachably from the mounting part,
wherein the mounting unit comprises:
a support plate including a first hook and a second hook which are coupleable to and decouplable from the first coupling protrusion and the second coupling protrusion;
a slider with a third hook and a fourth hook which are coupleable to and decouplable from the third coupling protrusion and the fourth coupling protrusion, and slidably connectable to the support plate; and
a body with a first coupling hole, a second coupling hole, a third coupling hole, and a fourth coupling hole in which the first coupling protrusion, the second coupling protrusion, the third coupling protrusion, and the fourth coupling protrusion are insertable, respectively, so that while the first coupling protrusion, the second coupling protrusion, the third coupling protrusion, and the fourth coupling protrusion the mounting unit is coupled to the support plate.

15. The connecting apparatus of claim 14, wherein the mounting unit further comprises:
a first elastic member and a second elastic member which elastically support the slider in a direction along which the slider moves away from the first hook and the second hook.
